Europäisches Patentamt

European Patent Office

Office européen des brevets

(11) Veröffentlichungsnummer: **0 200 892**
**B1**

(12) **EUROPÄISCHE PATENTSCHRIFT**

(45) Veröffentlichungstag der Patentschrift:
**20.07.88**

(21) Anmeldenummer: **86103561.6**

(22) Anmeldetag: **17.03.86**

(51) Int. Cl.⁴: **B 23 D 19/06** //
**B23D35/00**

(54) Vorrichtung zum gratfreien Schneiden von bandförmigem Material.

(30) Priorität: **26.03.85 DE 3510847**

(43) Veröffentlichungstag der Anmeldung:
**17.12.86 Patentblatt 86/46**

(45) Bekanntmachung des Hinweises auf die Patenterteilung:
**20.07.88 Patentblatt 88/29**

(84) Benannte Vertragsstaaten:
**AT BE CH DE FR GB IT LI LU NL SE**

(56) Entgegenhaltungen:
**CH-A-490 170**
**DE-B-1 036 013**
**FR-A-2 167 554**
**US-A-3 677 122**
**US-A-3 730 043**

(73) Patentinhaber: **Karl Jüngel GmbH & Co. KG,
Stixchesstrasse 136- 150, D-5090 Leverkusen 1 (DE)**

(72) Erfinder: **Krus, Werner, Jakobistrasse 15a, D-5090
Leverkusen 3 (DE)**

(74) Vertreter: **Patentanwaltsbüro Cohausz & Florack,
Postfach 14 01 47, D-4000 Düsseldorf 1 (DE)**

EP 0 200 892 B1

## Beschreibung

Die Erfindung bezieht sich auf eine Vorrichtung zum gratfreien Schneiden von bandförmigem Material, insbesondere aus Metall, in zwei Stufen, die zwei Paar Kreismesser auf achsparallelen Messerwellen aufweist, wobei jedes Kreismesserpaar aus einem Messer und einem Gegenmesser besteht, mit der das bandförmige Material in der ersten Trennstufe mit dem ersten Kreismesserpaar angeschnitten und in der zweiten Trennstufe mit dem zweiten Kreismesserpaar in entgegengesetzter Richtung durchtrennt wird.

Es ist bekannt, bandförmiges Material, wie z. B. Bänder, Bleche odgl., mit Hilfe einer aus einem Messer und einem Gegenmesser, d. h. aus einem Messerpaar bestehenden Schere in Streifen zu schneiden. Dabei können das Messer und das Gegenmesser der Schere die Messer einer hydraulisch oder pneumatisch arbeitenden Schere, einer Exzenterschere, aber auch die Kreismesser einer Kreismesser- bzw. Rundmesserschere sein. Wird nun bandförmiges Material mit Hilfe einer derartigen nur aus einem Messerpaar bestehenden Schere geschnitten, so treten beispielsweise an der Oberkante des Materials eine Einschnürung und an der Unterkante eine Gratbildung auf. Insbesondere diese Gratbildung ist aber für die Weiterverarbeitung des bandförmigen Materials von Nachteil, so daß das Material in der Regel anschließend nachbehandelt werden muß, um den Grat zu entfernen.

Um eine derartige bezüglich der erforderlichen Zusatzeinrichtungen aufwendige Nachbehandlung zur Entfernung des Grates zu vermeiden, ist aus der DE-B-1 806 305 bereits ein Verfahren zum gratfreien Schneiden bekannt, bei dem der Trennvorgang in zwei Stufen durchgeführt wird. Dies geschieht in der Weise, daß das bandförmige Material zunächst in der ersten Trennstufe von einer Seite auf einen Teil der Dicke des Materials angeschnitten bzw. angeschert und anschließend in der zweiten Trennstufe von der anderen Seite in die entgegengesetzte Richtung bis zur endgültigen Trennung durchschnitten wird. Durch dieses doppelte Scheren bzw. Schneiden in entgegengesetzter Richtung wird ein gratfreies Schneiden erreicht.

Bei der aus der deutschen Auslegeschrift DE-B-1 806 305 bekannten Vorrichtung bestehen die beiden Trennstufen aus zwei Kreismesserpaaren mit jeweils zwei achsparallel angeordneten Drehachsen, wobei die beiden Paare in Richtung des zu trennenden bandförmigen Materials hintereinander angeordnet sind. Diese vorbekannte Vorrichtung besitzt damit zwei Kreismesserpaare mit insgesamt vier paarweise hintereinander angeordneten achsparallelen Messerwellen. Dabei sind die vier Kreismesser starre, insbesondere aus einem Schneidstahl bestehende, Kreisscheiben. Das gratfreie Schneiden mit Hilfe dieser bekannten Vorrichtung geschieht in der Weise, daß das bandförmige Material zunächst in die erste Trennstufe mit dem ersten Kreismesserpaar einläuft, in dieser Stufe jedoch nur angeschert wird. Voraussetzung dafür ist, daß die Summe aus den Radien der beiden Kreismesser dieses ersten Kreismesserpaares kleiner ist als der Abstand der Achsen der beiden zugehörigen achsparallel angeordneten Drehachsen bzw. Messerwellen. Nach dem Verlassen der ersten Trennstufe tritt das nur angescherte bandförmige Material im Anschluß daran in die zweite Trennstufe mit dem zweiten Kreismesserpaar ein und wird nun in entgegengesetzter Richtung vollständig durchtrennt.

Zwar ist mit Hilfe dieser aus der DE-B-1 806 305 bekannten Vorrichtung ein gratfreies Schneiden von bandförmigem Material rundsätzlich möglich; ein wesentlicher Nachteil dieser Vorrichtung besteht jedoch darin, daß die vier Messerwellen der beiden Kreismesserpaare exakt achsparallel ausgerichtet werden müssen. Dies gilt insbesondere für die beiden in einem gewissen Abstand voneinander angeordneten Messerwellenpaare der ersten und zweiten Trennstufe. Es müssen nicht nur die beiden Messerwellen der ersten und zweiten Trennstufe untereinander, sondern auch die Messerwellen der ersten Trennstufe zu den beiden Messerwellen der zweiten Trennstufe exakt achsparallel ausgerichtet werden. So kann es beispielsweise durch ein ungenaues Ausrichten der beiden Messenwellenpaare zueinander geschehen, daß die durch das zweite Kreismesserpaar definierte Scher- bzw. Schnittebene (senkrecht zur Oberfläche des bandförmigen Materials) nicht mit der Schnittebene des ersten Kreismesserpaares zusammenfällt. Nur sofern diese Bedingung erfüllt ist, d. h. sofern beide Schnittebenen zusammenfallen, ist ein gratfreier und rechtwinkliger Schnitt nur möglich.

Ferner besteht ein weiterer wesentlicher Nachteil dieser bekannten Vorrichtung in der möglichst exakten Führung des bandförmigen Materials zwischen den beiden hintereinander angeordneten Kreismesserpaaren. Bereits durch ein geringfügiges Verkanten des bandförmigen Materials zwischen den Kreismesserpaaren kann es geschehen, daß die Scher- bzw. Schnittebene des zweiten Kreismesserpaares nicht genau von dem durch das erste Kreismesserpaar angeschnittenen Band getroffen wird. Ein sauberer gratfreier und rechtwinkliger Schnitt ist dann nicht mehr zu erzielen.

Von diesem Stand der Technik ausgehend liegt der Erfindung die Aufgabe zugrunde, eine Vorrichtung der eingangs genannten Art zu schaffen, bei der ein Verkanten des bandförmigen Materials zwischen den beiden Kreismesserpaaren vermieden wird und die ein gratfreies, rechtwinkliges Schneiden des bandförmigen Materials ermöglicht.

Erfindungsgemäß wird diese der Erfindung zugrunde liegende Aufgabe durch eine Vorrichtung der eingangs genannten Art dadurch gelöst, daß die Gegenmesser der beiden Kreismesserpaare auf einer gemeinsamen Messerwelle aneinanderliegend angeordnet sind und daß sie aus einem äußeren starren, insbesondere metallischen, Schneidring und aus einem innenliegenden ringförmigen gummielastischen Nabenteil bestehen.

Im Vergleich zu der aus der DE-B-1 806 305 bekannten Vorrichtung zum gratfreien Schneiden von Flachwalzmaterial besitzt die erfindungsgemäße Vorrichtung nun nicht mehr vier, sondern lediglich drei achsparallel angeordnete Messerwellen. Die mittlere den beiden Kreismesserpaaren gemeinsame Messerwelle ist dabei erfindungsgemäß mit zwei nebeneinander angeordneten und aneinanderliegenden Gegenmessern mit einem äußeren starren Schneidring und einem innenliegenden ringförmigen gummielastischen Nabenteil bestückt. Demgegenüber sind die beiden anderen Messerwellen mit je einem üblichen Kreismesser ausgerüstet, das aus einer starren, vorzugsweise aus einem Schneidstahl bestehenden, Kreisscheibe besteht. Die beiden Kreismesserpaare der erfindungsgemäßen Vorrichtung bestehen demnach aus je einem dieser neuartigen Gegenmesser auf der mittleren der drei Messerwellen und aus je einem üblichen Kreismesser auf den beiden äußeren Messerwellen. Da die beiden Gegenmesser auf der gemeinsamen mittleren Messerwelle aneinanderliegend angeordnet sind, fallen die Scher- bzw. Schnittebenen der beiden Kreismesserpaare der erfindungsgemäßen Vorrichtung zusammen.

Der Schneidprozeß mit Hilfe der erfindungsgemäßen Vorrichtung läuft in der folgenden Weise ab:

Das zu schneidende bandförmige Material wird zunächst in eines der beiden angetriebenen Kreismesserpaare zugfrei eingeführt und durchläuft diese erste Trennstufe, wodurch das bandförmige Material angeschert bzw. angeschnitten wird. Anschließend läuft das angescherte bandförmige Material in entgegengesetzter Richtung durch das zweite ebenfalls angetriebene Kreismesserpaar hindurch, wodurch ein Schnitt in entgegengesetzter Richtung erfolgt und das bandförmige Material vollständig durchtrennt wird. Die erfindungsgemäße Vorrichtung ist demnach eine Schere, bei der die Bandeinlauf- und die Bandauslaufseite auf ein und derselben Seite der drei vorzugsweise in einem einzigen Ständer übereinander angeordneten achsparallelen Messerwellen liegen.

Der wesentliche Vorteil der erfindungsgemäßen Vorrichtung ist darin zu sehen, daß der zweite Schnitt mit größter Präzision durchgeführt wird, da das in der ersten Trennstufe angescherte bandförmige Material während des Wendeprozesses um ca. 180 Grad die Fertigschnittebene der erfindungsgemäßen Vorrichtung nicht verläßt. Ein Verkanten des bandförmigen Materials zwischen der ersten und zweiten Trennstufe ist nicht mehr möglich. Dadurch wird in der zweiten Trennstufe die in der ersten Trennstufe angeschnittene Phase genau getroffen. Der rechtwinklige und gratfreie Schnitt ist darüber hinaus dadurch gewährleistet, daß die Restbruchphase in der zweiten Trennstufe vorzugsweise in der Querschnittsmitte des bandförmigen Materials liegt.

Vorzugsweise bestehen die beiden Gegenmesser der erfindungsgemäßen Vorrichtung aus einem äußeren Schneidring, aus einem inneren an der gemeinsamen Messerwelle befestigten Nabenring und aus einem zwischen diesen beiden Ringen angeordneten ringförmigen gummielastischen Nabenteil. Während der Nabenteil aus einem verformbaren elastischen Material besteht, sind der Schneidring und der Nabenring starr und bestehen ihrerseits vorzugsweise aus einem Metall, der äußere Schneidring insbesondere aus einem zum Schneiden von Blechen geeigneten Schneidstahl. Diese Ausführungsform der erfindungsgemäßen Gegenmesser ermöglicht in vorteilhafter Weise eine einfache Befestigung der Messer an der gemeinsamen Messerwelle.

Erfindungsgemäß besitzen sowohl die Gegenmesser, d. h. die äußeren Schneidringe der Gegenmesser, auf der gemeinsamen mittleren Messerwelle als auch die Kreismesser auf den beiden äußeren Messerwellen den gleichen Außendurchmesser. Darüber hinaus ist eine Anordnung der drei achsparallelen Messerwellen der erfindungsgemäßen Vorrichtung vorteilhaft, bei der die drei Messerwellen in nur einem einzigen Ständer angeordnet sind und in einer gemeinsamen, vorzugsweise vertikal verlaufenden, Ebene liegen. Zur vorgegebenen Dicke eines zu schneidenden bandförmigen Materials erleichtern diese beiden Maßnahmen die richtige Wahl des Abstandes der Achsen der drei in dem Ständer vorzugsweise übereinander angeordneten Messerwellen der erfindungsgemäßen Vorrichtung.

Sind $R_{KM}$ der Radius der Kreismesser auf den beiden äußeren Messerwellen, $R_{FM}$ der Radius der Gegenmesser (d. h. der Radius der äußeren starren Schneidringe der Gegenmesser) auf der mittleren Messerwelle und D die vorgegebenen Dicke des zu schneidenden bandförmigen Materials, so ist der Abstand der Achsen der beiden äußeren Messerwellen von der Achse der mittleren Messerwelle kleiner als die Summe aus den Werten $R_{KM}$, $R_{FM}$ und D. Ist darüber hinaus d die notwendige Verformung sowohl in der ersten als auch in der zweiten Trennstufe, so beträgt der Abstand a der Achsen der beide äußeren Messerwellen von der Achse der mittleren Messerwelle

$$a = R_{KM} + D + R_{FM} - d/2.$$

In vorteilhafter Weise sind zwei der drei Messerwellen bei der erfindungsgemäßen Vorrichtung gegenüber der dritten, insbesondere die beiden äußeren Messerwellen gegenüber der mittleren Messerwelle, achsparallel verstellbar. Damit wird erreicht, daß die Dicke D des zu schneidenden bandförmigen Materials beliebig variiert werden kann. Mit der gleichen erfindungsgemäßen Vorrichtung ist es damit möglich, bandförmiges Material unterschiedlicher Stärke gratfrei zu schneiden.

In den Zeichnungen sind Ausführungsbeispiele dargestellt, anhand derer die Erfindung näher erläutert wird.

Figur 1 zeigt eine erfindungsgemäße Vorrichtung zum Schneiden von bandförmigem Material in zwei Teile in einem Schnitt durch die Achsen der drei achsparallelen und in einer vertikalen Ebene angeordneten Messerwellen.

Figur 2 ist ein Schnitt längs der Linie A - B in Figur 1.

Figur 3 zeigt eine erfindungsgemäße Vorrichtung zum Spalten von bandförmigem Material in eine Vielzahl einzelner Bänder in einem Schnitt durch die Achsen der drei achsparallelen und in einer Ebene angeordneten Messerwellen.

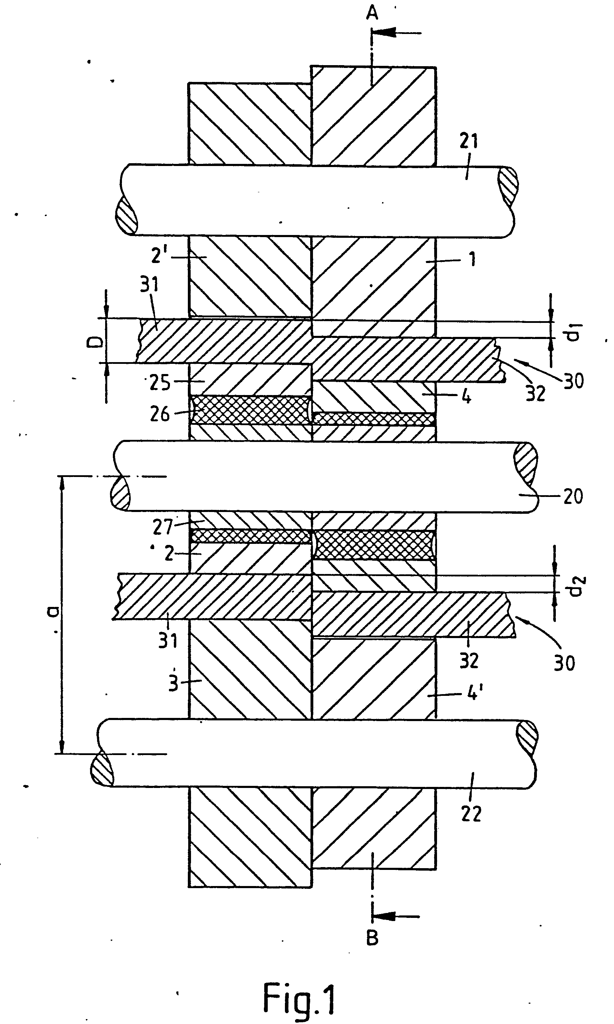

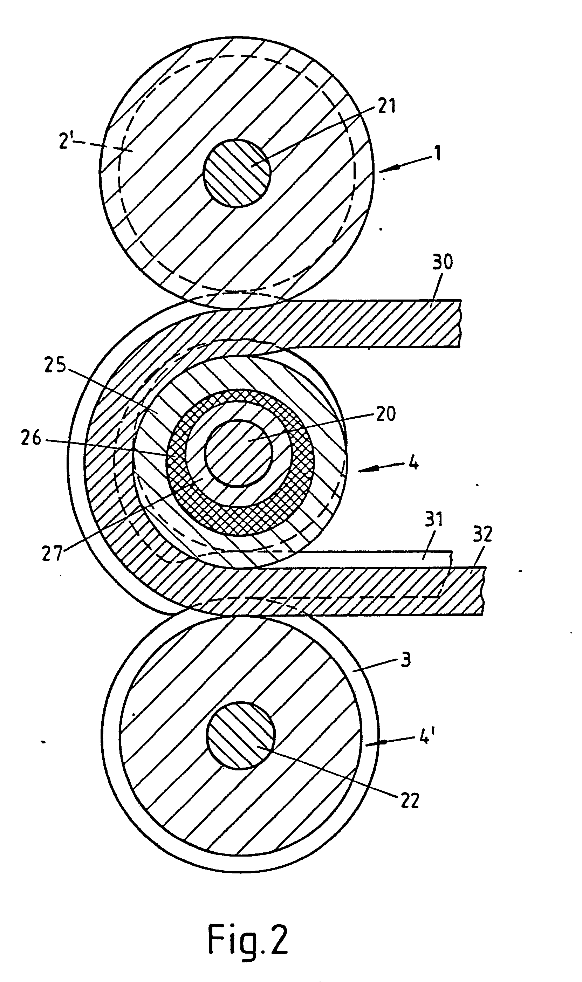

In Fig. 1 und 2 ist eine zum Schneiden von bandförmigem Flachmaterial 30, in zwei Teile bzw. Teilbänder 31, 32 geeignete erfindungsgemäße Vorrichtung dargestellt. Gemäß Fig. 1 sind die drei Messerwellen 20, 21, 22 achsparallel übereinander und in einer Ebene liegend in einem nicht dargestellten Ständer angeordnet. Auf diese drei Messerwellen sind nun die Kreismesser 1, 2, 3, 4 geschoben und an ihnen wie folgt befestigt:

Auf der mittleren Messerwelle 20 befinden sich die beiden nebeneinander angeordneten Gegenmesser 2 und 4. Sie bestehen aus dem äußeren Schneidring 25, einem innenliegenden Stahl-Nabenring 27 und aus einem dazwischenliegenden rindförmigen gummielastischen Nabenteil 26. Diese Ausführungsform der Gegenmesser 2, 4 ist vorteilhaft, weil durch den innenliegenden Nabenring 27 die Befestigung der Gegenmesser 2, 4 an der Welle 20 erleichtert wird. Die beiden den Gegenmessern 2 und 4 zugeordneten Kreismesser 1 und 3 üblicher Bauart (homogene Kreisscheiben aus einem Schneidstahl) sind nun in der Weise auf die beiden äußeren Messerwellen 21 und 22 geschoben und an ihnen befestigt, daß die Messer 1 und 2 das erste Kreismesserpaar und die Messer 3 und 4 das zweite Kreismesserpaar bilden. Dabei fallen, wie der Fig. 1 zu entnehmen ist, die Scher- bzw. Schnittebenen der beiden Kreismesserpaare 1, 2 und 3, 4 zusammen.

Sind $R_{KM}$ der Radius der Kreismesser 1 und 3 und $R_{FM}$ der Radius der Gegenmesser 2 und 4, so ergibt sich der Abstand a der Achsen der beiden äußeren Messerwellen 21 und 22 zur Achse der mittleren Messerwelle 20 bei vorgegebener Dicke D des zu schneidenden Bandmaterials 30 und bei vorgegebener notwendiger Verformung d in der ersten und zweiten Trennstufe zu

$$a = R_{KM} + D + R_{FM} - d/2.$$

Das zu schneidene Bandmaterial 30 wird zunächst in die erste Trennstufe, d. h. in das erste Kreismesserpaar 1, 2 eingeführt und dort mit der Verformung $d_1$ angeschert. Anschließend wird das angeschnittene Material durch ein Wenden um 180° in die zweite Trennstufe, d. h. in das Kreismesserpaar 3, 4 eingeschoben. In dieser Trennstufe erfolgt sodann ein erneutes Scheren des Bandmaterials mit der Verformung $d_2$, jedoch in diesem Fall in entgegengesetzter Richtung, so daß das Bandmaterial das Kreismesserpaar 3, 4 in Form zweier vollkommen voneinander getrennter Teile 31 und 32 verläßt. Dabei ist $d_1 = d_2$.

Mit 2' und 4' sind neben den Messern 1, 3 auf den Messerwellen 21, 22 befestigte Distanz- und Gegenhalteringe bezeichnet, die ein Verkanten des Bandmaterials 30 beim Schneidvorgang verhindern.

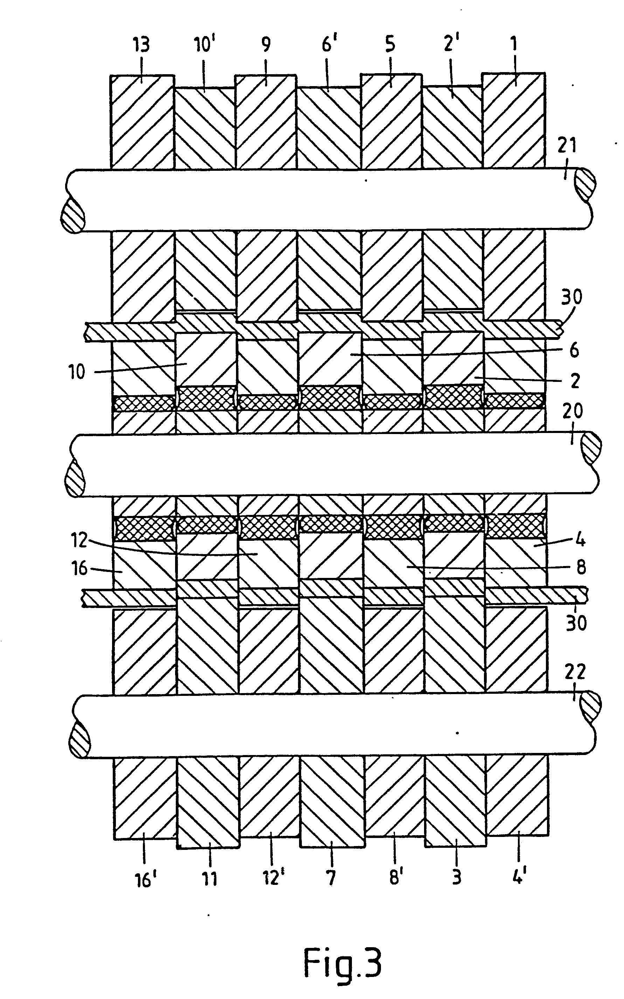

In Fig. 3 ist eine zum Spalten von bandförmigem Material 30 in eine Vielzahl einzelner Bänder geeignete erfindungsgemäße Vorrichtung dargestellt. Sie besteht aus einer Vielzahl von auf den drei achsparallel angeordneten Messerwellen 20, 21, 22 befestigten Kreismesserpaaren. Dabei sind wiederum die Gegenmesser 2, 4, 6, 8, 10, 12, 16 eines jeden Kreismesserpaares auf der gemeinsamen mittleren Messerwelle 20 nebeneinander angeordnet. In diesem Fall befinden sich zwischen den Messern 1, 5, 9, 13 auf der äußeren Messerwelle 21 und zwischen den Messern 3, 7, 11 auf der äußeren Messerwelle 22 Stahldistanzringe 2', 4', 6', 8', 10', 12', 16'. Während die Breite dieser Stahldistanzringe der Breite der zugeordneten Gegenmesser 2, 4, 6, 8, 10, 12, 16 entspricht, darf ihr Radius nicht größer sein als der Radius der Messer 1, 3, 5, 7, 9, 11, 13, abzüglich der Verformung d. Wird andererseits ihr Radius in vorteilhafter Weise zu $R_{KM}$ - d gewählt, so wirken diese Stahldistanzringe als Gegenhalteringe, die dafür sorgen, daß das angescherte bzw. vollkommen durchtrennte Material über die Breite dieser Ringe eben bleibt. Dabei wird die Breite der einzelnen Bänder, in die das bandförmige Material mit Hilfe der erfindungsgemäßen Vorrichtung gespalten wird, bestimmt durch die Breite der einander gegenüberliegenden Gegenmesser und der Messer auf den beiden äußeren Messerwellen 21 und 22. Dies bedeutet, daß beispielsweise die Breite des ersten Spaltbandes durch die vorgegebene Breite der Messer 1 und 4 die Spaltbreite des zweiten Bandes durch die vorgegebene Breite der Messer 2 und 3 und die Spaltbreite des dritten Bandes durch die vorgegebene Breite der Messer 5 und 8 bestimmt wird usw.

## Patentansprüche

1. Vorrichtung zum gratfreien Schneiden von bandförmigem Material (30), insbesondere aus Metall, in zwei Stufen, die zwei Paar Kreismesser (1, 2; 3, 4) auf achsparallelen Messerwellen (20, 21, 22) aufweist, wobei jedes Kreismesserpaar aus einem Messer und einem Gegenmesser besteht, mit der das bandförmige Material in der ersten Trennstufe mit dem ersten Kreismesserpaar (1, 2) angeschnitten und in der zweiten Trennstufe mit dem zweiten Kreismesserpaar (3, 4) in entgegengesetzter dichtung durchtrennt wird, dadurch gekennzeichnet, daß die Gegenmesser (2, 4) der beiden Kreismesserpaare (1, 2 und 3, 4) auf einer gemeinsamen Messerwelle (20) aneinanderliegend angeordnet sind und daß sie aus einem äußeren starren, insbesondere metallischen, Schneidring (25) und aus einem innenliegenden ringförmigen gummielastischen Nabenteil (26) bestehen.

2. Vorrichtung nach Anspruch 1, dadurch gekennzeichnet, daß das Nabenteil (26) zwischen dem Schneidring (25) und einem metallischen Nabenring (27) liegt.

3. Vorrichtung nach Anspruch 1 oder 2, dadurch gekennzeichnet, daß die Schneidringe (25) der Gegenmesser (2, 4) den gleichen Außendurchmesser besitzen.

4. Vorrichtung nach einem der Ansprüche 1 bis 3, dadurch gekennzeichnet, daß die beiden Kreismesserpaare (1, 2 und 3, 4) drei achsparallele Messerwellen (21, 20 und 22, 20) besitzen, die in derselben, insbesondere vertikal verlaufenden, Ebene liegen.

5. Vorrichtung nach einem der Ansprüche 1 bis 4, dadurch gekennzeichnet, daß zwei der drei Messerwellen (21, 20 und 22, 20) gegenüber der dritten, insbesondere die beiden äußeren Messerwellen (21, 22) gegenüber der mittleren Messerwelle (20), achsparallel verstellbar sind.

6. Vorrichtung nach einem der Ansprüche 1 bis 5, dadurch gekennzeichnet, daß neben den Kreismessern (1, 3) Distanzringe (2', 4'), insbesondere als Gegenhalteringe für das bandförmige Material, angeordnet sind.

## Claims

1. Apparatus for cutting material (30) in web form, particularly of metal without creating burr, in two stages, which has two pairs of circular knives (1, 2; 3, 4) on axially parallel knife shafts (20, 21, 22), each pair of circular knives consisting of a knife and a counter-knife, with which the material in web form is cut into by the first pair of circular knives (1, 2) in the first cutting stage and is severed by the second pair of circular knives (3, 4) in the opposite direction, in the second cutting stage, characterized in that the counter-knives (2, 4) of the two pairs of circular knives (1, 2 and 3, 4) are arranged alongside one another on a common knife shaft (20), and in that they consist of an outer rigid, in particular metal, cutting ring (25) and of an inner-lying annular elastomeric hub part (26).

2. Apparatus according to Claim 1, characterized in that the hub part (26) lies between the cutting ring (25) and a metal hub ring (27).

3. Apparatus according to Claim 1 or 2, characterized in that the cutting rings (25) of the counter-knives (2, 4) have the same outside diameter.

4. Apparatus according to one of Claims 1 to 3, characterized in that the two pairs of circular knives (1, 2 and 3, 4) have three axially parallel knife shafts (21, 20 and 22, 20), which lie in the same, in particular vertically running, plane.

5. Apparatus according to one of Claims 1 to 4, characterized in that two of the three knife shafts (21, 20 and 22, 20) are adjustable axially parallel with respect to the third shaft, in particular the two outer knife shafts (21, 22) with respect to the middle knife shaft (20).

6. Apparatus according to one of Claims 1 to 5, characterized in that, next to the circular knives (1, 3), there are arranged spacer rings (2', 4'), in particular as backup rings for the material in web form.

## Revendications

1. Dispositif pour couper des bandes (30) sans bavures, en particulier en métal, en deux étapes, qui présente deux paires de couteaux circulaires (1, 2; 3, 4) à arbres de couteaux (20, 21, 22) à axes parallèles, chaque paire de couteaux circulaires étant constituée d'un couteau et d'un contre-couteau, par lequel la bande est entamée par la première paire de couteaux circulaires (1, 2) au cours de la première étape de séparation et est séparée en travers par la seconde paire de couteaux circulaires (3, 4) en direction opposée au cours de la seconde étape de séparation, caractérisé par le fait que les contre-couteaux (2, 4) des deux paires de couteaux circulaires (1, 2 et 3, 4) sont disposées côte à côte sur un arbre de couteaux (20) commun et qu'ils sont constitués par un anneau de coupe (25) extérieur rigide, en particulier métallique, et d'un moyeu (26) élastique du type caoutchouc de forme annulaire disposé intérieurement.

2. Dispositif selon la revendication 1, caractérisé par le fait que le moyeu (26) se trouve entre l'anneau de coupe (25) et un anneau de moyeu (27) métallique.

3. Dispositif selon la revendication 1 ou 2, caractérisé par le fait que les anneaux de coupe (25) des contre-couteaux (2, 4) ont le même diamètre extérieur.

4. Dispositif selon l'une des revendications 1 à 3, caractérisé par le fait que les deux paires de couteaux circulaires (1, 2 et 3, 4) possèdent trois arbres de couteaux (21, 20 et 22, 20) à axes parallèles qui se trouvent dans un plan commun, de préférence vertical.

5. Dispositif selon l'une des revendications 1 à 4, caractérisé par le fait que deux des trois arbres de couteaux (21, 20 et 22, 20) sont réglables à axes parallèles par rapport au troisième, en particulier les deux arbres de couteaux extérieurs (21, 22) par rapport à l'arbre de couteaux médian (20).

6. Dispositif selon l'une des revendications 1 à 5, caractérisé par le fait que des anneaux d'écartement (2', 4'), en particulier en tant qu'anneaux de contre-support pour la bande, sont disposés à côté des couteaux circulaires (1, 3).

0 200 892

Fig.1

Fig.2

Fig.3